# FASCICULE DE BREVET EUROPEEN

(11) **EP 4 532 330 B1**
(45) Date de publication et mention de la délivrance du brevet: **17.06.2026**
(21) Numéro de dépôt: 23730849.9
(22) Date de dépôt: 26.05.2023
(51) Int. Cl.: B64G 3/00

(54) **DISPOSITIF DE SURVEILLANCE SPATIALE MULTI-ORBITES**
WELTRAUMÜBERWACHUNGSVORRICHTUNG FÜR MEHRERE UMLAUFBAHNEN
MULTI-ORBIT SPACE MONITORING DEVICE

(30) Priorité: 03.06.2022 FR 2205362
(43) Date de publication de la demande: 09.04.2025
(73) Titulaire: ARIANEGROUP SAS, 78130 Les Mureaux (FR)
(72) Inventeur: GIRAUD, Paul, 33185 LE HAILLAN (FR); DUSSOULIER, Yoann, 33185 LE HAILLAN (FR); DELOMENIE, Guillaume, 33185 LE HAILLAN (FR); EYHERAMONO, Gaëtan, 33185 LE HAILLAN (FR)
(74) Mandataire: Cabinet Beau de Loménie
(86) Numéro de dépôt international: PCT/FR2023/050739
(87) Numéro de publication internationale: WO 2023/233091

(56) Documents cités:
- EP-A1- 2 593 366
- FR-A1- 2 742 873
- US-A1- 2010 278 521
- US-A1- 2012 105 822

## Description

### Domaine Technique

La présente invention concerne un système de veille spatiale pour la surveillance de l'espace proche et lointain de la terre depuis le sol de façon à détecter les objets qui se trouvent dans cet espace, déterminer leurs trajectoires précises et surveiller ces trajectoires.

Un tel système permet de suivre l'évolution des trajectoires des objets et de cataloguer ces objets et leurs trajectoires.

### Technique antérieure

L'espace proche de la terre est défini comme la part de l'espace situé jusqu'à quelques centaines de milliers de kilomètres de la terre. La surveillance de l'espace de la terre concerne donc essentiellement, mais pas seulement, la détection des objets qui sont en orbite autour de la terre généralement entre une centaine et 36 000 km de la surface du globe terrestre.

Le contexte de la présente invention est la hausse du nombre d'objets en orbite autour de la Terre que l'on constate. Ces objets peuvent être, par exemple, des débris, des satellites opérationnels ou même des météorites.

L'invention s'intéresse, entre autres, aux objets en orbite basse (LEO pour « Low Earth Orbit » en anglais) de 200km à 2000km dont le nombre induit un risque croissant de collisions pouvant mener à long terme à un accroissement de la dégradation de la situation, mais surtout à des risques vis-à-vis des moyens spatiaux opérationnels, qu'ils soient militaires, scientifiques ou commerciaux. Afin de maîtriser ces risques, il est primordial de cataloguer l'ensemble des objets potentiellement dangereux et de leur associer des paramètres orbitaux valides qui permettent de décrire leurs trajectoires.

Observés depuis un point fixe sur la Terre, les objets en orbite basse présentent comme caractéristiques de défiler rapidement sur la voûte céleste. En outre, à chaque instant plusieurs objets traversent la voûte céleste en plusieurs endroits. Selon ses paramètres orbitaux l'intervalle de temps s'écoulant entre deux objets traversant successivement la voûte céleste locale peut varier de quelques dizaines de minutes à plusieurs heures.

Des effets divers tels que marée, freinage atmosphérique, pression de radiation, irrégularité du champ gravitationnel terrestre affectent les orbites. Ceci empêche de décrire ces orbites précisément à long terme avec un jeu invariant de paramètres orbitaux.

Par ailleurs, la distribution de taille des objets varie d'un rayon caractéristique de quelques millimètres, par exemple les résidus de propulsion, de peinture ou les météorites, à plusieurs dizaines de mètres, notamment les satellites ou systèmes orbitaux artificiels, qu'ils soient opérationnels ou non.

Réaliser une surveillance (ou « survey » en anglais) d'objets en orbite autour de la Terre implique de :
- détecter les objets en orbite basse, sans connaissance a priori de leur existence, ni de leur position,
- définir leur trajectoire ou paramètres orbitaux, avec une précision adaptée à l'exploitation envisagée,
- mettre à jour, au cours du temps, les paramètres orbitaux des objets détectés et l'intégration au sein d'un catalogue de suivi.

Il est en outre nécessaire de réacquérir les mêmes objets et de rafraîchir la mesure de leur paramètres orbitaux à chacun de leurs passages dans le champ de vision du moyen d'observation afin que leur précision reste adaptée en fonction de l'exploitation qui doit en être faite, par exemple pour mettre en œuvre les processus d'identification et de consolidation de risques de collision (ou « tracking » en anglais) ou de cartographie et de veille des objets spatiaux (« survey » en anglais)

Enfin, le système doit être capable d'affiner sur demande la précision de la connaissance des paramètres orbitaux d'un objet donné, de sorte de pouvoir déterminer aussi précisément que possible sa position dans un avenir proche, typiquement quelques jours.

Réaliser ces fonctions de veille nécessite de disposer :
- d'un large champ de vue,
- d'une sensibilité permettant de détecter les objets d'intérêt,
- d'une précision de mesure de l'évolution des objets traversant ce champ vue suffisante pour estimer leurs paramètres orbitaux avec le niveau de performance requis.

Les paramètres orbitaux s'estiment sur la base d'une série temporelle de mesures des vecteurs position/vitesses des objets acquises lors de leur transit dans le champ de vue.

Le brevet US 7 319 556 traite d'un télescope à large champ adapté à un système réalisant ces fonctions.

Les principales techniques actuellement envisagées et mises en œuvre pour réaliser une surveillance de l'orbite basse reposent sur des radars basés au sol :
- les radars dit, en anglais, de la « Space Fence » du Ministère de la Défense américain ;
- les radars GRAVES mis en œuvre par le Ministère de la Défense française (radar à balayage de phase, ou « phased array » en anglais, bi-statique, à émission continue),
- les radars type d'alerte anti-missile (radar à balayage de phase monostatique, à émission puisée).

Bien qu'offrant de nombreux avantages (large champ de vue permettant d'intercepter des zones de 180° en azimut sur quelques dizaines de degrés en élévation, accès simplifié aux informations de vitesse grâce aux mesures Doppler, insensibilité à la météo et au cycle jours/nuit, etc.), les solutions utilisant des radars pâtissent de nombreux inconvénients, résidant principalement dans leur coût de développement, d'opération et de maintenance, et dans leur bilan écologique :
- les fréquences utilisées sont élevées (bande L) ;
- il y a une génération de pertes magnétiques importante ;
- on a besoin de puissances de quelques dizaines de Mégawats, avec un faible rendement ;
- la durée moyenne avant défaut (MTBF) des radars, comme tout matériel électrique de forte puissance est faible et occasionne des coûts de maintenance élevés ;
- La population orbitale accessible par chaque radar est conditionnée par sa localisation sur le globe, ce qui conduit à les positionner en zone équatoriale, qui offre des conditions de température et d'humidité sévères pour les composants électriques et électronique augmentant d'autant le coût d'opération et de maintenance.

En alternative, les systèmes optiques ont déjà été considérés pour réaliser de la veille spatiale. Purement passifs, leur principe réside dans la détection de la lumière solaire réfléchie par les objets naturels ou artificiels en orbite autour de la Terre ou au-delà, astéroïdes et planétoïdes par exemple. De tels systèmes donnent accès à des séries temporelles de mesure des positions angulaires des objets par exemple en azimut et élévation.

Diverses méthodes sont appliquées pour mesurer ces positions, comme notamment une méthode s'appuyant sur la mesure à chaque instant de la position des objets détectés relativement aux étoiles présentes dans le champ de vue, étoiles dont la position est connue avec une très grande précision.

L'avantage majeur des systèmes optiques sur les systèmes radar réside dans leur faible coût tant en développement, en production, en opération et en maintenance, dans leur fiabilité et dans leur simplicité de mise en œuvre.

Et, purement passifs, ils nécessitent peu d'infrastructure, énergie, bâtiments, moyens de transport.

Les systèmes optiques sont normalement utilisés pour surveiller l'orbite géostationnaire (ou GEO pour « Geostationary Earth Orbit » en anglais), mais aussi pour surveiller l'orbite intermédiaire (ou MEO pour « Middle Earth Orbit » en anglais), située entre la LEO et la GEO, car les objets sur ces deux orbites ont la particularité de défiler très peu sur la voûte céleste, ce qui facilite les temps d'observation longs nécessaires à la détection d'objets petits et/ou de très faible intensité lumineuse.

Le système « GEODSS » de l'US Air Force est un exemple opérationnel de tels systèmes. Il est composé principalement de télescopes métriques présentant un champ de vue faible de l'ordre du degré. Pour ces applications GEO et MEO, on peut utiliser des temps d'intégration (de pose) longs, de 1 à quelques secondes, qui permettent d'augmenter le rapport signal sur bruit de façon à détecter de petits objets de quelques dizaines de cm de diamètre caractéristique.

Un exemple de réalisation multi-capteurs est décrit dans le document US 2009/0147238.

Quelques études ont également été initiées pour définir des solutions à même de surveiller la LEO.

Par exemple le système expérimental français SPOC (Système Probatoire pour l'Observation du Ciel) intégrait quatre petites lunettes d'ouverture de l'ordre de 10 cm orientées selon les quatre points cardinaux avec une élévation de quelques dizaines de degrés et offrant chacune un champ de vue de l'ordre de 10°.

D'autres concepts proposent des systèmes catadioptriques sensibles d'ouverture métrique ou plus dits de grand champ, de l'ordre de 5°, dédiés à la surveillance de la LEO, comme par exemple le système décrit dans le brevet US 7 319 556 précité.

Les solutions précitées et proposées actuellement ne permettent toutefois pas de résoudre les difficultés et contraintes fondamentales liées à la surveillance de la LEO à savoir :
- la nécessité d'une détection rapide (quelques jours) de tout nouvel objet, afin notamment d'identifier tout phénomène de fragmentation ou d'explosion en orbite ;
- la nécessité d'une ré-acquisition fréquente (tous les quelques jours) de chaque objet, et une remise à jour de ses paramètres orbitaux afin de maintenir une précision de paramètres orbitaux exploitable, notamment vis-à-vis de l'évaluation opérationnelle de risques de collision ;
- la détectabilité des objets interdépendante de la situation géographique des système optique et orbites (inclinaison en particulier) des objets, liée à leur conditions d'éclairement ;
- les observations optiques liées aux conditions météorologiques locales (nébulosités) ;

Du fait de ces contraintes, la surveillance de la LEO nécessite également des systèmes optiques spécifiques ayant une très bonne sensibilité, avec une excellente résolution et un grand champ de vue. En effet, les télescopes existant ont usuellement une grande sensibilité, avec de grandes ouvertures et/ou des temps d'intégration longs, et une haute résolution ce qui va au détriment d'un champ de vue large, puisque destinés à des applications classiques d'astronomie ou de veille des planètes mineures ou des astéroïdes : ils ne sont donc pas compatibles avec la veille d'objets en LEO.

Par ailleurs, le principe de la veille ne prévoit pas le suivi des objets. De ce fait lors de l'observation de la LEO, les durées d'intégration longues n'améliorent pas la détectabilité d'un objet, évalué par rapport au rapport signal sur bruit dans chaque pixel éclairé. Car, en cas d'intégration classique (la seconde), l'objet traverse plusieurs pixel du capteur (CCD ou CMOS) sur la durée d'intégration pénalisant non seulement la détermination de la position et sa datation, et intégrant du bruit et donc dégradant le rapports signal sur bruit une fois le pixel traversé.

D'un autre point de vue, les solutions connues ne sont pas adaptées aux conditions de détection en LEO, et ne permettent donc pas d'assurer l'observation de l'ensemble d'objets observables avec un temps de revisite adapté.

Enfin, les télescopes à grand champ restent limités comme notamment les télescopes connus du document US 2009/009897ou du document EP 1 772 761.

D'autres exemples de télescopes sont donnés dans les documents US 7 045 774, US 2007/0188610 et US 2009/0015914.

Il est également connu, des documents EP 2 593 366, EP 2 593 367, et EP 2 593 368, des systèmes de veille spatiale pour la surveillance de l'espace proche.

Il est également connu du document US 2010/278521 un dispositif de surveillance d'objets en orbite spatiale autour de la Terre.

### Exposé de l'invention

La présente invention a donc pour but principal de fournir un dispositif optique passif de surveillance d'objets en orbite spatiale autour de la Terre sur les orbites proches, moyennes et géostationnaires, avec un champ de surveillance large d'une capacité d'au moins 120° d'ouverture azimutale.

Selon un objet de l'invention, il est proposé un dispositif de surveillance d'objets en orbite spatiale autour de la Terre, le dispositif comprenant un châssis, un plateau, au moins trois modules optiques de surveillance, et un bloc d'alimentation et de commande logé au moins partiellement à l'intérieur du châssis, le plateau étant monté sur le châssis, et chaque module optique de surveillance étant monté sur le plateau et comportant une tourelle rotative, un capteur d'images monté sur la tourelle rotative, et un système optique passif monté sur l'entrée du capteur d'images, la tourelle rotative étant configurée pour pivoter sur plus de 360° autour d'un premier axe perpendiculaire au plan dans lequel s'étend le plateau et pour pivoter sur 90° autour d'un second axe perpendiculaire au premier axe et parallèle au plan dans lequel s'étend le plateau.

Le dispositif selon l'invention forme ainsi un dispositif à système optique passif pour la surveillance d'objets spatiaux, lesdits au moins trois modules optiques fournissant un champ optique de surveillance simultanée important et permettant de réduire le temps nécessaire pour détecter des objets en orbite spatial autour de la Terre, et ainsi d'augmenter le nombre d'objets pouvant être détectés dans un temps imparti.

Dans un premier mode de réalisation du dispositif, les tourelles rotatives peuvent être des tourelles motorisées comprenant au moins un moteur permettant d'actionner la rotation selon les deux axes de rotation, et le bloc d'alimentation et de commande comporte une unité de commande pour chaque tourelle rotative configurée pour commander une tourelle rotative indépendamment des autres tourelles rotatives.

Les modules optiques peuvent ainsi être commandés par une commande automatisée et/ou à distance, et ils peuvent être commandés indépendamment les uns des autres, ce qui permet éventuellement de suivre un objet en cours de détection par un module optique tandis que les autres modules optiques ne bougent pas ou bougent dans des directions différentes.

Selon un deuxième mode de réalisation du dispositif, le châssis peut comprendre des pieds ajustables en hauteur, les pieds étant ajustables entre au moins deux longueurs différentes pour avoir un plateau positionnable entre une première hauteur de 1000 mm et une seconde hauteur de 2030 mm.

Les pieds ajustables permettent d'ajuster la hauteur du plateau en fonction de l'environnement dans lequel le dispositif est installé tout en conservant des dimensions et un poids raisonnables et de placer les dispositifs optiques dans les meilleures conditions pour avoir un champ d'observation le plus dégagé possible.

Selon un troisième mode de réalisation du dispositif, le plateau peut comprendre un orifice central au travers duquel passent les câbles d'alimentation et de données couplés entre les modules optiques de surveillance et le bloc d'alimentation et de commande.

L'orifice central du plateau permet de concentrer tous les câbles couplés aux différents modules optiques au centre du dispositif pour les diriger vers le bloc d'alimentation et de commande et ainsi réduire l'encombrement du dispositif et réduire les risques que les câbles entrent dans le champs d'observation d'un des modules optiques.

Selon un quatrième mode de réalisation du dispositif, les tourelles rotatives sont préférentiellement en aluminium pour réduire le poids des tourelles rotatives et ainsi le poids total du dispositif. En variante, les tourelles rotatives peuvent également être en acier inoxydable pour réduire le coût de fabrication.

Selon un cinquième mode de réalisation du dispositif, les tourelles rotatives sont de préférence réparties uniformément sur un cercle de diamètre inférieur au cercle inscrit du plateau.

La répartition uniforme des modules optiques le long du périmètre d'un cercle permet d'optimiser le champ d'observation et de réduire la surface de recouvrement des champs d'observations des différents modules optiques.

Selon un sixième mode de réalisation du dispositif, le dispositif peut comprendre en outre un bloc de régulation de température fixé sur le bloc d'alimentation et de commande et configuré pour réguler la température du bloc d'alimentation et de commande entre +13°C et +23°C. Le bloc d'alimentation et de commande peut être réalisé sous la forme d'une baie d'alimentation comportant une unité de commande. Le bloc de régulation de température permet au dispositif de pouvoir être placé et utilisé dans des environnements dont les conditions sont normalement moins favorables au bon fonctionnement du dispositif. Le bloc de régulation de température peut être un bloc de chauffage ou un bloc de refroidissement ou une unité de climatisation configurée pour chauffer ou refroidir le bloc d'alimentation et de commande en fonction des conditions environnementales.

Selon un septième mode de réalisation du dispositif, le dispositif peut comprendre en outre un bloc de régulation hygrométrique fixé sur le bloc d'alimentation et de commande configuré pour réguler l'hygrométrie à l'intérieur du bloc d'alimentation et d'acquisition à un taux d'humidité compris entre 30% et 60%.

Le bloc de régulation hygrométrique permet au dispositif de pouvoir être placé et utilisé dans des environnements dont les conditions sont normalement moins favorables au bon fonctionnement du dispositif.

Dans un mode de réalisation, le bloc de régulation de la température peut être un bloc de chauffage et le bloc de régulation hygrométrique peut être un bloc de climatisation configuré pour refroidir la baie d'alimentation et réguler son hygrométrie.

Selon un huitième mode de réalisation du dispositif, le dispositif comprend de préférence six modules optiques de surveillance répartis uniformément sur un cercle dont le diamètre est inférieur au diamètre du cercle inscrit dudit plateau.

L'utilisation de six modules optiques permet d'avoir une couverture optique optimisée.

Selon un neuvième mode de réalisation, les tourelles rotatives peuvent être limitées en rotation minimum autour du premier axe à 10° d'amplitude, pouvant atteindre une rotation maximum de 360° et ont un pas de déplacement de 1° et pouvant atteindre un pas allant jusqu'à 0.1°.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] La figure 1 représente une vue en perspective d'un dispositif de surveillance d'objets en orbite spatiale autour de la Terre selon un mode de réalisation de l'invention.
[Fig. 2] La figure 2 représente une vue de dessus du dispositif de la figure 1.
[Fig. 3] La figure 3 représente une vue en perspective du châssis et du plateau du dispositif de la figure 1.

### Description des modes de réalisation

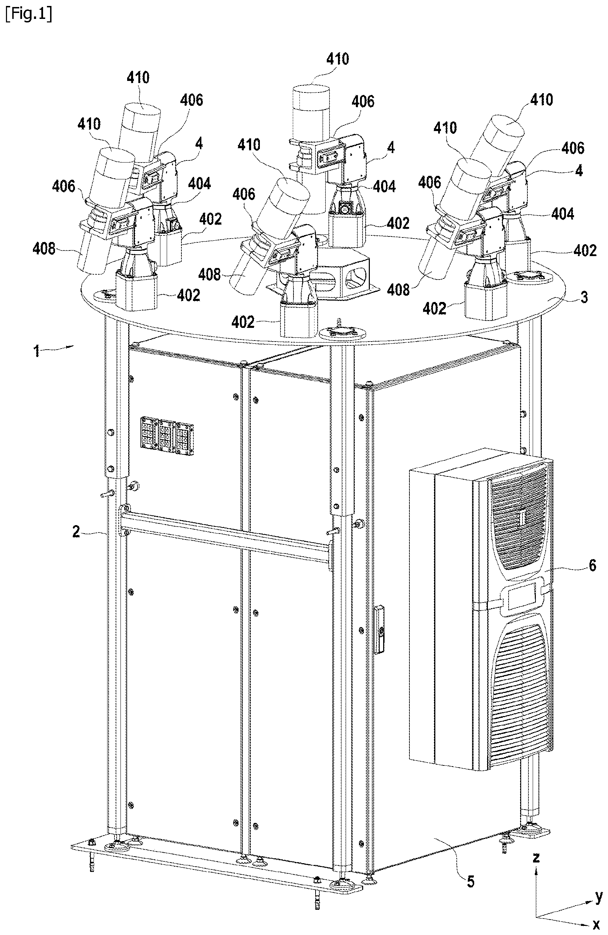

Sur la figure 1 est représenté schématiquement une vue en perspective d'un dispositif 1 de surveillance d'objets en orbite spatiale autour de la Terre selon un mode de réalisation de l'invention.

Le dispositif 1 comprend un châssis 2, un plateau 3, six modules optiques 4 de surveillance, un bloc 5 d'alimentation et de commande, et un bloc 6 de régulation de fonctionnement.

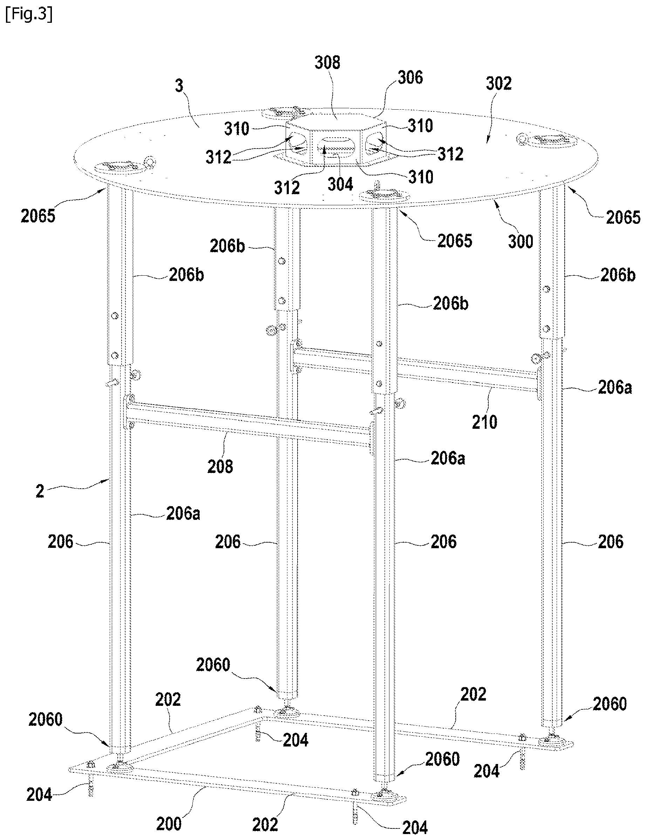

Comme cela est illustré sur la figure 3 qui représente une vue en perspective du châssis 2 et du plateau 3 du dispositif 1 de la figure 1, le châssis 2 comprend une base 200 en forme de U comportant trois segments 202 et quatre ensembles 204 boulonnés chacun à une extrémité ou un coin de la base 200 et destinés à fixer la base 200 au sol sur lequel le dispositif 1 sera fixé.

Le châssis 2 comprend en outre quatre pieds 206 vissés chacun, à une première extrémité 2060, sur la base 200. Les quatre pieds 206 avec dispositifs anti-vibrations sont disposés aux quatre coins d'un carré s'étendant dans un plan parallèle au plan dans lequel s'étend la base 200. Deux premiers pieds 206 sont solidarisés l'un à l'autre par une première traverse 208, et deux seconds pieds 206 distincts des premiers pieds sont solidarisés l'un à l'autre par une seconde traverse 210.

Chaque pied 206 comprend une partie inférieure 206a et une partie supérieure 206b s'emboîtant partiellement sur la partie inférieure 206a. La première traverse 208 est fixée sur les parties inférieures 206a des deux premiers pieds 206, et la seconde traverse 210 est fixée sur les parties inférieure 206a des deux seconds pieds 206.

La partie supérieure 206b de chaque pied 206 coulisse le long de la partie inférieure 206a à laquelle elle est associée, la partie inférieure 206a coulissant à l'intérieur de la partie supérieure 206b. La hauteur de chaque pied 206 peut ainsi être ajustée entre une position basse et une position haute en fonction de l'environnement du dispositif 1 pour s'assurer que le champ de vision des modules optiques est dégagé.

Chaque pied 206 comprend une seconde extrémité 2065 fixée au plateau 3. La première extrémité 2060 de chaque pied 206 correspond à une extrémité de la partie inférieure 206a jamais recouverte par la partie supérieure 206b, et la seconde extrémité 2065 de chaque pied 206 correspond à une extrémité de la partie supérieure 206b.

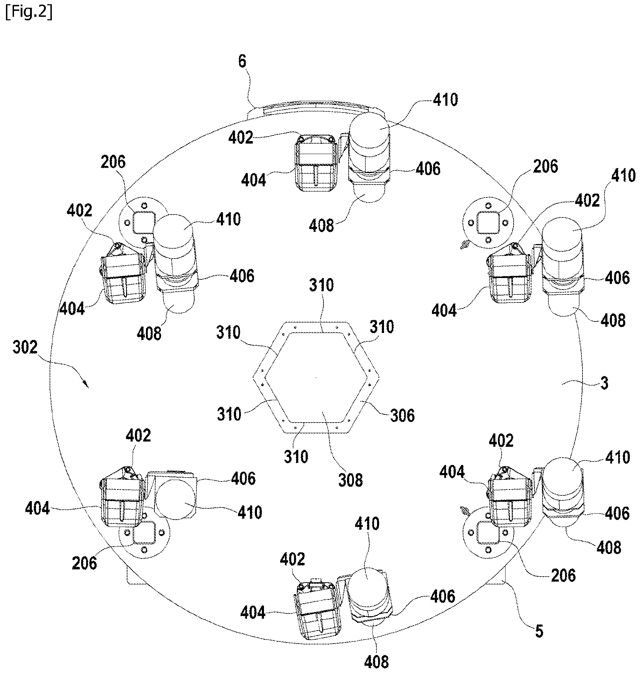

Comme cela est illustré sur la figure 2 qui présente une vue de dessus du dispositif 1 de la figure 1, le plateau 3 possède une forme de disque et comprend une surface inférieure 300 en regard du châssis 2 sur lequel le plateau 3 est fixé et une surface supérieure 302 opposée à la surface inférieure 300, les modules optiques 4 étant montés sur la surface supérieure 302 du plateau 3.

Le plateau 3 comprend en outre un orifice central 304 traversant au centre du disque sur lequel est monté un capot 306 à base hexagonale, avec une face supérieure 308 parallèle à la surface supérieure 302 du plateau 3 et six faces latérales 310 s'étendant perpendiculairement au plateau 3 entre la surface supérieure 302 du plateau 3 et la face supérieure 308 du capot 306. Chaque face latérale 310 du capot 306 est percée d'un orifice 312 pour pouvoir passer des câbles au travers d'un orifice 312 de face latérale et de l'orifice central 304 du plateau 3.

Les modules optiques 4 sont disposés régulièrement sur le périmètre d'un cercle dont le diamètre est inférieur au périmètre extérieur du disque formé par le plateau 3. Ainsi, chaque module optique 4 est séparé du module optique 4 suivant d'un angle de 30° mesuré par rapport au centre du disquedu plateau 3. Cet angle de séparation entre modules peut varier en fonction des configurations.

Si le plateau possédait une forme autre que celle d'un disque, une forme polygonale par exemple, le cercle sur lequel les modules optiques 4 seraient disposés aurait un diamètre inférieur au diamètre du cercle inscrit dans la forme polygonale du plateau 3.

Chaque module optique 4 comprend une tourelle rotative motorisée 400 en aluminium pour maintenir un poids le plus léger possible à un coût réduit. Chaque tourelle 400 comprend un support 402 fixé sur le plateau 3, le support 402 étant surmonté ensuite d'un pied 404 qui peut pivoter autour d'un premier axe perpendiculaire au plan dans lequel s'étend le plateau 3, le plateau 3 s'étendant parallèlement à un plan comprenant les directions X e Y, et le premier axe s'étendant selon une direction parallèle à une direction Z telle qu'illustré sur la figure 1.

La tourelle 400 de chaque module optique 4 comprend également un bras 406 couplé au pied 404 de la tourelle 400. Le bras 406 est monté sur le pied 404 de manière rotative selon un second axe qui est perpendiculaire au premier axe et qui s'étendant parallèlement au plan comprenant les directions X et Y.

Sur le bras 406 de chaque tourelle 400 est monté un capteur d'images 408 couplé, sur son entrée optique, à un système optique passif 410 tel qu'un ensemble de lentilles.

Ainsi chaque ensemble composé d'un capteur d'images 408 et de son système optique passif 410 associé peut être orienté selon deux directions, la première direction et la seconde direction.

Le pied 404 d'une tourelle 400 peut pivoter autour du premier axe, c'est-à-dire Z, à 185° dans un sens et 185° dans l'autre sens, couvrant ainsi 370° dans un plan parallèle au plan XY. Le bras 406 d'une tourelle 400 peut pivoter autour du second axe à 90° dans un sens et 90° dans l'autre sens, couvrant ainsi 180° dans un plan perpendiculaire au plan XY.

Les câbles reliant les modules optiques 4 au bloc d'alimentation et de commande 5 ne sont pas représentés pour plus de clarté. Chaque câble passe par un orifice 312 d'une face latérale 310 du capot 306 avant de passer par l'orifice central 304 du plateau 3 pour être ensuite acheminé jusqu'au bloc d'alimentation et de commande 5. Le bloc d'alimentation et de commande 5 peut ainsi commander l'alimentation électrique des moteurs des tourelles 400 et des capteurs d'image 408 des modules optiques, l'orientation des pieds 404 et des bras 406 de chaque tourelle, et l'acquisition des images par les capteurs d'images 408.

Le bloc d'alimentation et de commande 5 est conformé pour être disposé à l'intérieur du volume défini par le châssis 2 et le plateau 3, notamment entre les pieds 206 du châssis 2. Le bloc d'alimentation et de commande 5 comprend en outre un module de commande pour chaque tourelle 400 permettant ainsi de commander chaque tourelle 400 de manière indépendante des autres tourelles 400.

Le bloc de régulation de de fonctionnement 6 est couplé thermodynamiquement au bloc d'alimentation et de commande 5 et est configuré pour réguler la température et l'hygrométrie à l'intérieur du bloc d'alimentation et de commande 5. La température dans ce dernier bloc 5 peut ainsi être maintenue à une température comprise entre +13°C et +23°C et à une hygrométrie inférieure à 60% d'humidité pour un fonctionnement optimal du dispositif 1.

## Revendications

1. Dispositif (1) de surveillance d'objets en orbite spatiale autour de la Terre, le dispositif (1) comprenant un châssis (2), un plateau (3), au moins trois modules optiques (4) de surveillance, et un bloc d'alimentation et de commande (5) logé au moins partiellement à l'intérieur du châssis (2), le plateau (3) étant monté sur le châssis (2), et chaque module optique (4) de surveillance étant monté sur le plateau (3) et comportant une tourelle rotative (400), un capteur d'images (408) monté sur la tourelle rotative (400), et un système optique passif (410) monté sur l'entrée du capteur d'images (408), la tourelle rotative (400) étant configurée pour pivoter sur plus de 360° autour d'un premier axe perpendiculaire au plan dans lequel s'étend le plateau (3) et pour pivoter sur 90° autour d'un second axe perpendiculaire au premier axe et parallèle au plan dans lequel s'étend le plateau (3).

2. Dispositif (1) selon la revendication 1, dans lequel les tourelles rotatives (400) sont des tourelles motorisées comprenant au moins un moteur permettant d'actionner la rotation selon les deux axes de rotation, et le bloc d'alimentation et de commande (5) comporte une unité de commande pour chaque tourelle rotative (400) configurée pour commander une tourelle rotative (400) indépendamment des autres tourelles rotatives (400).

3. Dispositif (1) selon l'une des revendications 1 ou 2, dans lequel le châssis (2) comprend des pieds (206) ajustables en hauteur, les pieds (206) étant ajustables entre au moins deux longueurs différentes pour avoir un plateau (3) positionnable entre une première hauteur de 1000 mm et une seconde hauteur de 2030 mm.

4. Dispositif (1) selon l'une des revendications 1 à 3, dans lequel le plateau (3) comprend un orifice central (304) au travers duquel passent les câbles d'alimentation et de données couplés entre les modules optiques (4) de surveillance et le bloc d'alimentation et de commande (5).

5. Dispositif (1) selon l'une des revendications 1 à 4, dans lequel les tourelles rotatives (400) sont en aluminium.

6. Dispositif (1) selon l'une des revendications 1 à 5, dans lequel les tourelles rotatives (400) sont réparties uniformément sur un cercle de diamètre inférieur au cercle inscrit du plateau (3).

7. Dispositif (1) selon l'une des revendications 1 à 6, comprenant en outre un bloc de régulation de température (6) fixé sur le bloc d'alimentation et de commande (5) et configuré pour réguler la température du bloc d'alimentation et de commande (5) entre +13°C et +23°C.

8. Dispositif (1) selon l'une des revendications 1 à 7, comprenant en outre un bloc de régulation hygrométrique (6) fixé sur le bloc d'alimentation et d'acquisition (5) configuré pour réguler l'hygrométrie à l'intérieur du bloc d'alimentation et de commande (5) à un taux d'humidité compris entre 30% et 60%.

9. Dispositif (1) selon l'une des revendications 1 à 8, comprenant six modules optiques (4) de surveillance répartis uniformément sur un cercle dont le diamètre est inférieur au diamètre du cercle inscrit dudit plateau (3).

10. Dispositif (1) selon l'une des revendications à 9, dans lequel les tourelles rotatives (400) sont limitées en rotation minimum autour du premier axe à 10° d'amplitude et ont un pas de déplacement de 1°.

## Patentansprüche

1. Vorrichtung (1) zur Überwachung von Objekten in einer Weltraumumlaufbahn um die Erde, wobei die Vorrichtung (1) ein Gestell (2), eine Platte (3), wenigstens drei optische Überwachungsmodule (4) und einen Versorgungs- und Steuerblock (5), der wenigstens teilweise im Inneren des Gestells (2) untergebracht ist, umfasst, wobei die Platte (3) auf dem Gestell (2) angebracht ist und jedes optische Überwachungsmodul (4) auf der Platte (3) angebracht ist und einen Drehturm (400), einen auf dem Drehturm (400) angebrachten Bildsensor (408) und ein auf dem Eingang des Bildsensors (408) angebrachtes passives optisches System (410) umfasst, wobei der Drehturm (400) dazu ausgelegt ist, um mehr als 360° um eine erste Achse zu schwenken, die senkrecht zu der Ebene ist, in der sich die Platte (3) erstreckt, und um 90° um eine zweite Achse zu schwenken, die senkrecht zu der ersten Achse und parallel zu der Ebene ist, in der sich die Platte (3) erstreckt.

2. Vorrichtung (1) nach Anspruch 1, wobei die Drehtürme (400) motorisierte Türme sind, die wenigstens einen Motor umfassen, der es ermöglicht, die Drehung gemäß den beiden Drehachsen anzutreiben, und der Versorgungs- und Steuerblock (5) für jeden Drehturm (400) eine Steuereinheit umfasst, die dazu ausgelegt ist, einen Drehturm (400) unabhängig von den anderen Drehtürmen (400) zu steuern.

3. Vorrichtung (1) nach einem der Ansprüche 1 oder 2, wobei das Gestell (2) höhenverstellbare Füße (206) umfasst, wobei die Füße (206) zwischen wenigstens zwei unterschiedlichen Längen verstellbar sind, um eine Platte (3) zu erhalten, die zwischen einer ersten Höhe von 1000 mm und einer zweiten Höhe von 2030 mm positionierbar ist.

4. Vorrichtung (1) nach einem der Ansprüche 1 bis 3, wobei die Platte (3) eine zentrale Öffnung (304) umfasst, durch die die zwischen den optischen Überwachungsmodulen (4) und dem Versorgungs- und Steuerblock (5) gekoppelten Versorgungs- und Datenkabel hindurchgeführt sind.

5. Vorrichtung (1) nach einem der Ansprüche 1 bis 4, wobei die Drehtürme (400) aus Aluminium sind.

6. Vorrichtung (1) nach einem der Ansprüche 1 bis 5, wobei die Drehtürme (400) gleichmäßig auf einem Kreis verteilt sind, dessen Durchmesser kleiner als der Inkreis der Platte (3) ist.

7. Vorrichtung (1) nach einem der Ansprüche 1 bis 6, die ferner einen Temperaturregelblock (6) umfasst, der an dem Versorgungs- und Steuerblock (5) befestigt und dazu ausgelegt ist, die Temperatur des Versorgungs- und Steuerblocks (5) zwischen +13 °C und +23 °C zu regeln.

8. Vorrichtung (1) nach einem der Ansprüche 1 bis 7, die ferner einen Hygrometrieregulierungsblock (6) umfasst, der an dem Versorgungs- und Erfassungsblock (5) befestigt und dazu ausgelegt ist, die Hygrometrie im Inneren des Versorgungs- und Steuerblocks (5) auf eine Feuchtigkeit zwischen 30 % und 60 % zu regeln.

9. Vorrichtung (1) nach einem der Ansprüche 1 bis 8, die sechs optische Überwachungsmodule (4) umfasst, die gleichmäßig auf einem Kreis verteilt sind, dessen Durchmesser kleiner als der Durchmesser des Inkreises der Platte (3) ist.

10. Vorrichtung (1) nach einem der Ansprüche 1 bis 9, wobei die Drehtürme (400) in der Mindestdrehung um die erste Achse auf eine Amplitude von 10° begrenzt sind und eine Verschrittung von 1° aufweisen.

## Claims

1. A device (1) for monitoring objects in space orbit around the Earth, the device (1) comprising a chassis (2), a plate (3), at least three optical survey modules (4), and a power supply and control block (5) housed at least partially inside the chassis (2), the plate (3) being mounted on the chassis (2), and each optical survey module (4) being mounted on the plate (3) and including a rotating turret (400), an image sensor (408) mounted on the rotating turret (400), and a passive optical system (410) mounted on the inlet of the image sensor (408), the rotating turret (400) being configured to pivot over more than 360° about a first axis perpendicular to the plane in which the plate (3) extends and to pivot over 90° about a second axis perpendicular to the first axis and parallel to the plane in which the plate (3) extends.

2. The device (1) according to claim 1, wherein the rotating turrets (400) are motorized turrets comprising at least one motor for actuating the rotation along the two axes of rotation, and the power supply and control block (5) includes a control unit for each rotating turret (400) configured to control a rotating turret (400) independently of the other rotating turrets (400).

3. The device (1) according to any of claims 1 or 2, wherein the chassis (2) comprises height-adjustable feet (206), the feet (206) being adjustable between at least two different lengths to have a plate (3) that can be positioned between a first height of 1,000 mm and a second height of 2,030 mm.

4. The device (1) according to any of claims 1 to 3, wherein the plate (3) comprises a central orifice (304) through which the power and data cables pass, coupled between the optical survey modules (4) and the power supply and the control block (5).

5. The device (1) according to any of claims 1 to 4, wherein the rotating turrets (400) are made of aluminum.

6. The device (1) according to any of claims 1 to 5, wherein the rotating turrets (400) are uniformly distributed on a circle with a diameter smaller than the inscribed circle of the plate (3).

7. The device (1) according to any of claims 1 to 6, further comprising a temperature regulation block (6) fixed on the power supply and control block (5) and configured to regulate the temperature of the power supply and control block (5) between +13°C and +23°C.

8. The device (1) according to any of claims 1 to 7, further comprising a hygrometric regulation block (6) fixed on the power supply and control block (5) configured to regulate the hygrometry inside the power supply and control block (5) at a humidity level comprised between 30% and 60%.

9. The device (1) according to any of claims 1 to 8, comprising six optical survey modules (4) uniformly distributed on a circle whose diameter is smaller than the diameter of the inscribed circle of said plate (3).

10. The device (1) according to any of claims 1 to 9, wherein the rotating turrets (400) are limited in rotation about the first axis to 10° of amplitude and have a displacement pitch of 1°.
